# EUROPEAN PATENT APPLICATION

(11) **EP 4 737 816 A1**
(43) Date of publication of application: **06.05.2026**
(21) Application number: 25210782.6
(22) Date of filing: 23.10.2025
(51) Int. Cl.: F24S 20/67, H02S 20/24

(54) **HEAT AND POWER SYSTEM FOR A BUILDING AND A BUILDING COMPRISING A HEAT AND POWER SYSTEM**

(30) Priority: 29.10.2024 SE 2451068
(71) Applicant: Light absorber AB, 132 31 Saltsjö-Boo (SE)
(72) Inventor: Moberg, Arne, 122 37 Enskede (SE)
(74) Representative: Bjerkén Hynell KB

(57) **Abstract**

A heat and power system (1) for a building (2) is disclosed. The system (1) comprises: power units (3), supplementary heat units (5), attachment elements (7) and an edge element (9). The power units (3) and the supplementary heat units (5) are arranged to cover the whole outer surface (4) of the building (2), when both being attached to the attachment elements (7) and to the edge element (9). The edge element (9) and the elongated attachment elements (7) are configured to create a number of channels (13) delimited by the outer surface (4) of the building (2) and by the power units (3) and by the supplementary heat units (5). The system (1) further comprises: an inlet (15) and an outlet (17) for the gaseous medium to be transported in and out from the system (1) while being heated by solar radiation or while being cooled. A building (2) comprising a heat and power system (1) is also disclosed.

## Description

### TECHNICAL FIELD

The present disclosure relates to the technical field of heat and power generation. Particularly, the present disclosure relates to a heat and power system for a building and to a building comprising a heat and power system.

### BACKGROUND

In the time of increasing energy demand and at the same time fluctuating prices on the power market it has been important to focus on solutions that may save energy.

Efforts have been made to develop energy systems with increased efficiency. There are several heat systems available on the market.

One problem with the existing solutions is that the systems often are not visually attractive. Further, it has been realized that further improvements are also needed regarding the efficiency of energy systems.

### SUMMARY

It is an objective of the present disclosure to overcome, or at least alleviate, at least some of the above-mentioned problems and drawbacks. It is a further objective of the present disclosure to provide an efficient heat and power system.

These objectives and others are at least partly achieved by the system and by the building according to the independent claims, and by the embodiments according to the dependent claims.

According to a first aspect, the disclosure relates to a heat and power system for a building, the system comprises a first number of power units, a second number of supplementary heat units and a third number of elongated attachment elements. Each attachment element is configured to be attached to an outer surface of the building and each power unit and each supplementary heat unit are configured to be attached to at least one of the third number of the attachment element. Thus, the power units and the supplementary units may be attached to one or to several attachment elements.

Further, the heat and power system comprises an edge element configured to be attached to an edge surface of the outer surface of the building. The power units and the supplementary heat units are configured to be attached to the edge element. Therefore, the power units and the supplementary units may be attached to the edge element and to at least one elongated attachment element or the power units and the supplementary units may be attached to several elongated attachment elements, preferably to two elongated attachment elements.

The first number of power units and the second number of supplementary heat units are arranged to cover the whole outer surface of the building, when both being attached to the attachment elements and to the edge element being attached to the outer surface of the building.

The size of the power units may vary regarding the area of each power unit. According to some embodiments standard size power units may be used. The first number of power unit is chosen depending on the area of the outer surface of the building. In many cases, there is an uncovered area of the outer surface of a building that may not be well covered by the power units or if an extended number of power units would be used some of the power units would extend outside the outer surface of the building. Therefore, it has been realized that there is a need of supplementary heat units that, be the form, size and numbers, may be adapted to the remaining area of the outer surface of the building that cannot be well covered by the power units. As a result, the first number of power units and the second number of supplementary heat units together cover the whole outer surface of the building, when both being attached to the attachment elements and to the edge element being attached to the outer surface of the building. Consequently, the whole outer surface of the building is covered creating conditions for an efficient use of the outer surface of the building.

Further, the edge element and the elongated attachment elements, when attached to the outer surface of the building, are configured to create a number of channels delimited by the outer surface of the building and by the power units and by the supplementary heat units attached to the attachment elements and to the edge element.

The heat and power system also comprises an inlet for a gaseous medium to be provided to a first channel of the number of channels to flow through said channels while being heated by solar radiation passing through the power units and the supplementary heat units or while being cooled by air outside the building and outside the system and an outlet for the gaseous medium to be transported out from a second channel of the number of channels of the heat and power system.

As a result, a heat and power system is provided having conditions for an efficient use of the whole outer surface of a building. Further, since the whole outer surface of the building is covered a more visually attractive system is provided comparing to the existing solutions.

According to some embodiments, the first channel is delimited by a first attachment element of the third number of attachment elements, arranged to have contact with the edge element when being attached to the outer surface of the building, while the remaining attachment elements do not have contact with the edge element when being attached to the outer surface of the building. Preferably, the first attachment element has contact with the edge element only at one end of the first attachment element to create an inlet channel to a labyrinth-like channel system created below the power units and the supplementary heat units attached to the edge element and/or to the elongated attachment elements.

According to some embodiments, each of the first number of power units is a solar cell unit. Thus, the heat and power system may produce electric energy by using power generated by the solar cells. The heat and power system may then comprise an electric arrangement connected to the solar cells and configured to use and/or to store the produced power. The produced electric energy may be used in the building and/or may be provided to an electric grid.

According to some embodiments, each of the second number of the supplementary heat units is a glass unit, i.e. not a solar cell unit. Preferably, the colour of the glass units corresponds to the colour of the power units, such as solar cell units.

According to some embodiments, the outer surface of the building is an outer surface of a roof of the building, wherein the attachment elements and the edge element are configured to be attached to the roof of the building. According to some embodiments, the outer surface may be an outer wall surface of a building.

According to some embodiments, the gaseous medium is ambient air. Other gaseous mediums, such as air from a building may be used.

According to some embodiments, the heat and power system comprises a heat exchanger connected to the outlet and configured for heat exchange between the gaseous medium transported through the outlet and at least one further medium of an energy system comprised by the heat and energy system and arranged in the building. Thus, the energy in the gaseous medium passing through the channels may be used in an energy system mounted in the building.

According to some embodiments, the energy system comprises an air subsystem for heating or cooling of the building and/or the energy system comprises a hot water subsystem and/or the energy system comprises an energy storage subsystem such as a heat storage subsystem, wherein the further medium is air and/or water.

According to some embodiments, the heat exchanger is connected to the inlet. As a result, the gaseous medium may be led back to the inlet to the channels after passing through the heat exchanger.

According to some embodiments, the heat and power system comprises a fan arranged to create a forced flow of the gaseous medium through the inlet. Thus, the flow of the gaseous medium may be led through the inlet into the channels in a controllable manner. As a result, a yet improved heat and power system is provided.

According to some embodiments, the heat and power system comprises a heat pump unit connected to the outlet to receive the gaseous medium transported through the outlet. Thus, energy in the gaseous medium may be used for heat exchange in the evaporator of the heat pump unit.

According to some embodiments, the heat and power system may comprise:
- a suction gas exchanger connected to the heat pump unit and connected to a third gas line connected to the outlet to receive a portion of the gaseous medium and/or
- a further heat exchanger configured for heat exchange between the gaseous medium transported through the outlet and exhaust air from the building and air intended to be provided to building from the outside of the building, wherein the further heat exchanger is connected to the heat pump unit.

Thus, an improved heat and power system may be provided having conditions for using and controlling the available energy in the system depending on the outer temperature outside the building and the temperatures within the system.

The further heat exchanger may be integrated with the heat pump unit, or the further heat exchanger may be a pre-heat exchanger arranged upstream an evaporator of the heat pump unit. According to some embodiments the gaseous medium transported through the outlet may be provided directly to the evaporator of the heat pump unit. Preferably, the suction gas exchanger is connected to the heat exchanger of the heat pump unit. The suction gas exchanger may be used, for example, for defrosting of the heat exchanger of the heat pump unit. Thus, the energy in the gaseous medium may be used in a yet improved manner.

According to some embodiments, the heat pump unit may be connected to the energy system through an energy carrier line configured for heat exchange with the refrigerant of the heat pump unit. Thus, the energy in the gaseous medium may be used in a yet improved way.

According to some embodiments, the heat and power system comprises a number of throttle units configured to control the flow of the gaseous medium through the channels and to control the flow of the gaseous medium to and from the heat exchanger and to control the flow of the gaseous medium to the heat pump unit. According to some embodiments a partial control of the flows may be performed for an efficient control of the flows depending on the present temperature of the gaseous medium.

According to a second aspect, the disclosure relates to a building comprising a heat and power system according to any one of the embodiments described herein, wherein at least part of the heat and power system has been mounted on an outer surface of the building. According to a third aspect, the disclosure related to a method of covering an outer surface of a building with a corresponding heat and power system.

The same advantages as have been described above with regards to the first aspect are thereby achieved.

According to some embodiments, the outer surface is a roof of the building. According to some embodiments, the outer surface may be an outer wall surface of a building.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a heat and power system according to the present disclosure and
Fig. 2 schematically illustrates a building comprising a heat and power system illustrated in Fig. 1.

### DETAILED DESCRIPTION

Aspects of the present invention will now be described more fully. Like numbers refer to like elements throughout. Well-known functions or constructions will not necessarily be described in detail for brevity and/or clarity.

The terminology used in the description of the embodiments as illustrated in the accompanying drawings is not intended to be limiting of the described heat and power system and the building. Various changes, substitutions and/or alterations may be made, without departing from disclosure embodiments as defined by the appended claims.

Arrows used in the drawings illustrate the flow directions of the gaseous medium or other media in the heat and power system 1.

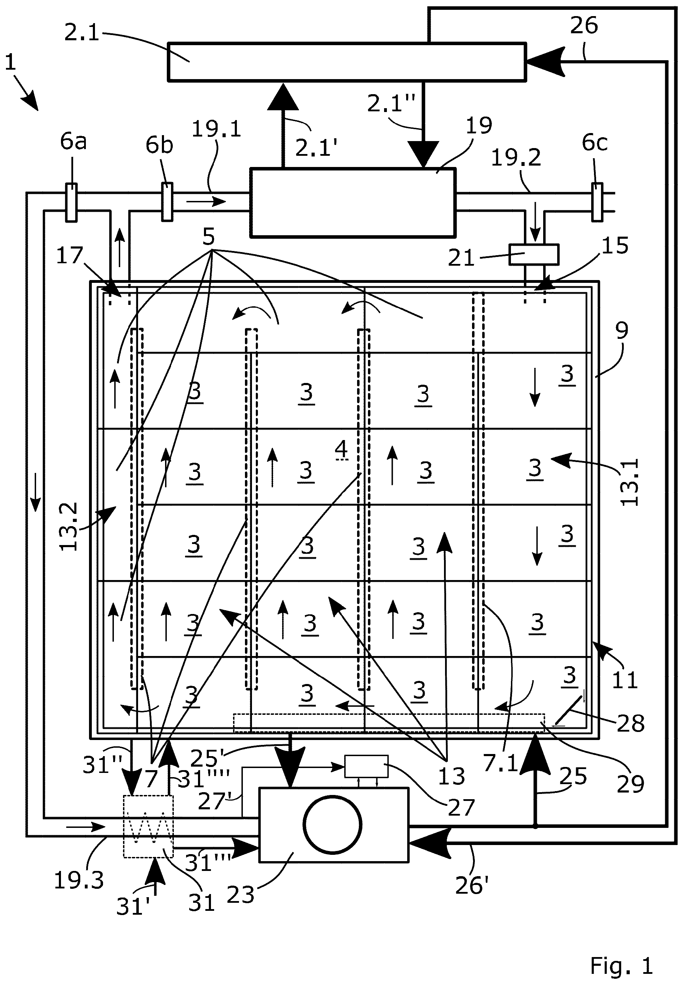

In **Fig. 1** a heat and power system 1 according to the present disclosure is schematically illustrated. The system 1 comprises:
- a first number of power units 3,
- a second number of supplementary heat units 5,
- a third number of elongated attachment elements 7, wherein each attachment element 7 is configured to be attached to an outer surface 4 of the building 2 and wherein each power unit 3 and each supplementary heat unit 5 are configured to be attached to at least one of the third number of the attachment element 7, and
- an edge element 9 configured to be attached to an edge surface 11 of the outer surface 4 of the building 2, wherein the power units 3 and the supplementary heat units 5 are configured to be attached to the edge element 9.

The first number of power units 3 and the second number of supplementary heat units 5 are arranged to cover the whole outer surface 4 of the building 2, when both being attached to the attachment elements 7 and to the edge element 9 being attached to the outer surface 4 of the building 2.

Further, the edge element 9 and the elongated attachment elements 7, when attached to the outer surface 4 of the building 2, are configured to create a number of channels 13 delimited by the outer surface 4 of the building 2 and by the power units 3 and by the supplementary heat units 5 attached to the attachment elements 7 and to the edge element 9.

As illustrated in Fig. 1, the heat and power system 1 also comprises:
- an inlet 15 for a gaseous medium to be provided to a first channel 13.1 of the number of channels 13 to flow through said channels 13 while being heated by solar radiation passing through the power units 3 and the supplementary heat units 5 or while being cooled by air outside the building 2 and outside the system 1 and
- an outlet 17 for the gaseous medium to be transported out from a second channel 13.2 of the number of channels 13 of the heat and power system 1.

Preferably, the outlet 17 is connected to a first gas line 19.1 and the inlet 15 is connected to a second gas line 19.2.

According to the illustrated embodiments, the first channel 13.1 is delimited by a first attachment element 7.1, of the third number of attachment elements 7, arranged to have contact with the edge element 9 when being attached to the outer surface 4 of the building 2, while the remaining attachment elements 7 do not have contact with the edge element 9 when being attached to the outer surface 4 of the building 2.

Preferably, each of the first number of power units 3 is a solar cell unit. Thus, the heat and power system 1 may produce electric energy by using power generated by the solar cells 3. The heat and power system 1 may then comprise an electric arrangement (not shown) connected to the solar cells 3 and configured to use and/or to store the produced power. The produced electric energy may be used in the building 2 and/or may be provided to an electric grid (not shown).

Preferably, each of the second number of the supplementary heat units 5 is a glass unit. The glass units may be tempered glass units having a similar colour to the colour of the power units 3.

The outer surface 4 of the building 2 may be an outer surface of a roof of the building 2, wherein the attachment elements 7 and the edge element 9 are configured to be attached to the roof of the building 2. Thus, for example, screw connections adapted for roofs may be used.

Preferably, gaseous medium is ambient air. Thus, ambient air may be provided to the system 1 through the second gas line 19.2 connected to the inlet 15.

According to the illustrated embodiments, the heat and power system 1 comprises a heat exchanger 19 connected to the outlet 17 and configured for heat exchange between the gaseous medium transported through the outlet 17 and at least one further medium of an energy system 2.1 arranged in the building 2. The further medium may be air and/or water and may be transported via further medium lines 2.1' and 2.1" connected to the heat exchanger 19 and to the energy system 2.1.

The energy system 2.1 may comprise an air subsystem for heating or cooling of the building 2. The air subsystem may provide air directly to the building or inhouse air may be heat exchanged with air of the energy system 2.1. The air subsystem may be a heat and ventilation system of the building 2. According to some embodiments, the energy system 2.1 may comprise a hot water subsystem arranged to provide hot water. According to some further embodiments, the energy system 2.1 may comprise an energy storage subsystem, such as a floor heating subsystem or a water storage tank or other suitable energy storage subsystem.

According to some embodiments, the heat exchanger 19 may be connected to the inlet 15 for a flow of gaseous medium to flow back to the inlet 15.

As illustrated in Fig. 1, the heat and power system 1 may comprise a fan 21 arranged to create a forced flow of the gaseous medium through the inlet 15.

Optionally, the heat and power system 1 may comprise a heat pump unit 23 connected to the outlet 17 to receive the gaseous medium transported through the outlet 17. Preferably the gaseous medium is heat exchanged in the evaporator (not shown) of the heat pump unit 23.

According to some embodiments, the heat and power system 1 may comprise:
- a suction gas exchanger 27 connected to the heat pump unit 23 and connected to a third gas line 19.3 connected to the outlet 17 to receive a portion of the gaseous medium and/or
- a further heat exchanger 31 configured for heat exchange between the gaseous medium transported through the outlet 17 and exhaust air from the building 2 and air intended to be provided to building 2 from the outside of the building 2. The further heat exchanger 31 may be connected to the heat pump unit 23.

According to the illustrated embodiments a part of a flow of the gaseous medium transported from the outlet 17 and through the third gas line 19.3 is provided to the suction gas exchanger 27 through a partial line 27' connected to the third gas line 19.3, wherein the third gas line being arranged to connect the outlet 17 and the heat pump unit 23. Preferably, the further heat exchanger 31 is a pre-heat exchanger, such as an air/air heat exchanger arranged upstream an evaporator of the heat pump unit 23. Air from the outside of the building 2 may be provided to the further heat exchanger 31 via a first air line 31'. The exhaust air from the building 2 may be provided to the further heat exchanger 31 via a second air line 31". The exhaust air heat exchanged in the further heat exchanger 31may be provided to the heat pump unit 23 via a third air line 31‴. Air to the building 2 that has been heat exchanged in the further heat exchanger 31 may be provided via a fourth air line 31ʺʺ.

Preferably, the suction gas exchanger 27 is connected to the evaporator of the heat pump unit 23. The suction gas exchanger 27 may be used, for example, for defrosting of the heat evaporator of the heat pump unit 23. Thus, the energy in the gaseous medium may be used in the heat pump unit 23 in an efficient manner.

The heat pump unit 23 may be connected to an indoor system 29 configured to receive energy from an energy carrier flowing through carrier lines 25 and 25'. The energy carrier may be air or water. The carrier lines 25 and 25' are then connected to a condenser of the heat pump unit 23 to heat exchange with the refrigerant of the heat pump unit 23.

According to the illustrated embodiments, the heat pump unit 23 may also be connected to the energy system 2.1 through further carrier lines 26 and 26' connected to the condenser of the heat pump unit for heat exchange with the refrigerant of the heat pump unit 23.

As illustrated in Fig. 1 the heat and power system 1 may comprise a number of throttle units 6a, 6b, 6c configured to control the flow of the gaseous medium through the channels 13 and to control the flow of the gaseous medium to and from the heat exchanger 19 and to control the flow of the gaseous medium to the heat pump unit 23. A first throttle unit 6a is arranged downstream the outlet 17 and upstream the heat pump unit 23. A second throttle unit 6b is arranged downstream the outlet 17 and upstream an inlet to the heat exchanger 19. A third throttle unit 6c is arranged downstream an outlet from the heat exchanger 19 and upstream the inlet 15 and is arranged to enable the gaseous medium to flow into the system 1 from the outside of the system 1 in an open position of the third throttle unit 6c or to create a closed loop for the gaseous medium in a closed position the third throttle unit 6c when the gaseous medium flows from the heat exchanger 19 back to the inlet 15. At an initial operation of the system 1 the third throttle 6c is open to enable the gaseous medium to flow in to the system 1. A partial control of the flows by controlling the throttle units 6a, 6b, 6c may also be achieved. According to the illustrated embodiments only the major throttle units 6a, 6b, 6c have been illustrated. However, each of the illustrated flow branches comprises a throttle to enable control of the flow through the branches. These throttles have not been marked as being obvious construction details of the system 1.

Preferably, the system 1 comprises a flow control part 28 arranged at the end of the first channel 13.1 and being angled in relation to a main flow direction of the gaseous medium through the first channel 13.1, such that the flow of the gaseous medium is directed to flow into the remaining channels 13, 13.1 of the system 1. Preferably, the flow control part 28 is arranged to enable the gaseous medium to flow around the flow control part 28 to at least decrease the risk for overheating of the corner of the system where the flow control part 28 has been installed. Thus, there may be distances between the ends of the control part 28 and the edge element 9. Preferably, the control part 28 is a plate of metal having thickness corresponding to the height of the channels 13, 13.1 and 13.2 measured from the surface 4 to inside surfaces of the power units 3 and/or supplementary heat units 5.

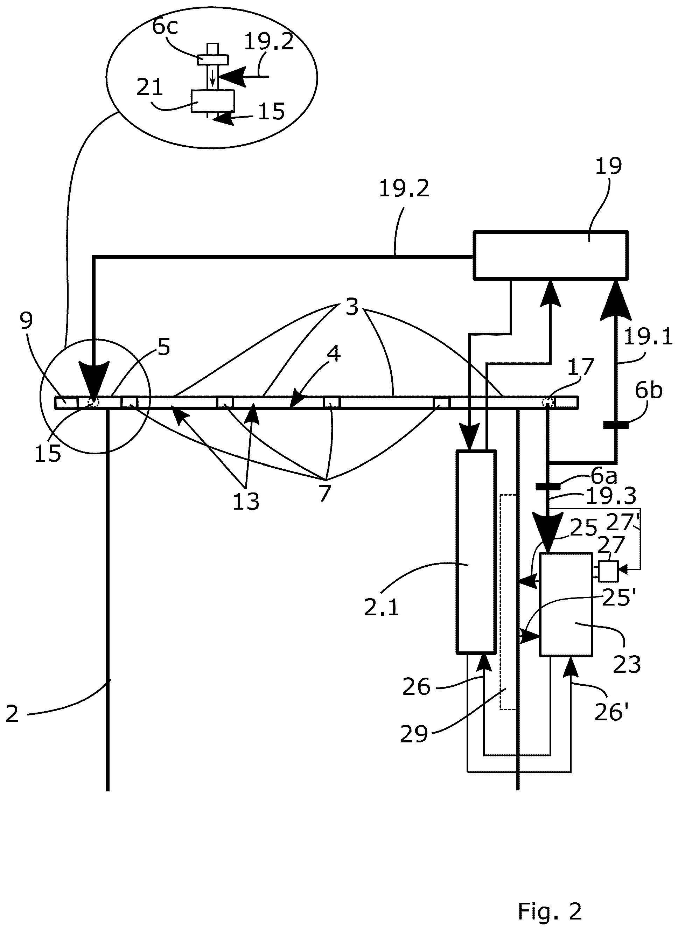

**Fig. 2** schematically illustrates a building 2 comprising a heat and power system illustrated in Fig. 1, wherein at least part of the heat and power system 1 has been mounted on an outer surface 4 of the building 2. According to the illustrated embodiments, the outer surface 4 is a roof of the building 2.

## Claims

1. A heat and power system (1) for a building (2), the system (1) comprises:
- a first number of power units (3),
- a second number of supplementary heat units (5),
- a third number of elongated attachment elements (7), wherein each attachment element (7) is configured to be attached to an outer surface (4) of the building (2) and wherein each power unit (3) and each supplementary heat unit (5) are configured to be attached to at least one of the third number of the attachment element (7), and
- an edge element (9) configured to be attached to an edge surface (11) of the outer surface (4) of the building (2), wherein the power units (3) and the supplementary heat units (5) are configured to be attached to the edge element (9),
wherein the first number of power units (3) and the second number of supplementary heat units (5) are arranged to cover the whole outer surface (4) of the building (2), when both being attached to the attachment elements (7) and to the edge element (9) being attached to the outer surface (4) of the building (2),
wherein the edge element (9) and the elongated attachment elements (7), when attached to the outer surface (4) of the building (2), are configured to create a number of channels (13) delimited by the outer surface (4) of the building (2) and by the power units (3) and by the supplementary heat units (5) attached to the attachment elements (7) and to the edge element (9),
wherein the heat and power system (1) comprises:
- an inlet (15) for a gaseous medium to be provided to a first channel (13.1) of the number of channels (13) to flow through said channels (13) while being heated by solar radiation passing through the power units (3) and the supplementary heat units (5) or while being cooled by air outside the building (2) and outside the system (1), and
- an outlet (17) for the gaseous medium to be transported out from a second channel (13.2) of the number of channels (13) of the heat and power system (1).

2. The heat and power system (1) according to claim 1, wherein the first channel (13.1) is delimited by a first attachment element (7.1), of the third number of attachment elements (7), arranged to have contact with the edge element (9) when being attached to the outer surface (4) of the building (2), while the remaining attachment elements (7) do not have contact with the edge element (9) when being attached to the outer surface (4) of the building (2).

3. The heat and power system (1) according to claim 1 or 2, wherein each of the first number of power units (3) is a solar cell unit.

4. The heat and power system (1) according to any one of the preceding claims, wherein each of the second number of the supplementary heat units (5) is a glass unit, i.e. not a solar cell unit.

5. The heat and power system (1) according to any one of the preceding claims, wherein the outer surface (4) of the building (2) is an outer surface of a roof of the building (2), wherein the attachment elements (7) and the edge element (9) are configured to be attached to the roof of the building (2).

6. The heat and power system (1) according to any one of the preceding claims, wherein the gaseous medium is ambient air.

7. The heat and power system (1) according to any one of the preceding claims, comprising a heat exchanger (19) connected to the outlet (17) and configured for heat exchange between the gaseous medium transported through the outlet (17) and at least one further medium of an energy system (2.1) comprised by the heat and energy system (1) and arranged in the building (2).

8. The heat and power system (1) according to claim 7, wherein the energy system (2.1) comprises an air subsystem for heating or cooling of the building (2) and/or the energy system (2.1) comprises a hot water subsystem and/or the energy system (2.1) comprises an energy storage subsystem, wherein the further medium is air and/or water.

9. The heat and power system (1) according to claim 7 or 8, wherein the heat exchanger (19) is connected to the inlet (15).

10. The heat and power system (1) according to any one of the preceding claims, comprising a heat pump unit (23) connected to the outlet (17) to receive the gaseous medium transported through the outlet (17).

11. The heat and power system (1) according to claim 10, comprising:
- a suction gas exchanger (27) connected to the heat pump unit (23) and connected to a third gas line (19.3) connected to the outlet (17) to receive a portion of the gaseous medium and/or
- a further heat exchanger (31) configured for heat exchange between the gaseous medium transported through the outlet (17) and exhaust air from the building and air intended to be provided to building from the outside of the building, wherein the further heat exchanger (31) is connected to the heat pump unit (23).

12. The heat and power system (1) according to claims 10 or **11** and 7, wherein the heat pump unit (23) is connected to the energy system (2.1) through further carrier lines (26, 26') connected for heat exchange with the refrigerant of the heat pump unit (23).

13. The heat and power system (1) according to any one of the claims 7 to 12, comprising a number of throttle units (6a, 6b, 6c) configured to control the flow of the gaseous medium through the channels (13) and to control the flow of the gaseous medium to and from the heat exchanger (19).

14. The heat and power system (1) according to any one of the preceding claims, wherein the power units (3) comprise solar cells for producing electric energy, and the supplementary heat units (5) do not comprise solar cells.

15. A method of covering an outer surface (4) of a building (2) with a heat and power system (1) that comprises:
- a first number of power units (3),
- a second number of supplementary heat units (5),
- a third number of elongated attachment elements (7), wherein each attachment element (7) is configured to be attached to an outer surface (4) of the building (2) and wherein each power unit (3) and each supplementary heat unit (5) are configured to be attached to at least one of the third number of the attachment elements (7), and
- an edge element (9) configured to be attached to an edge surface (11) of the outer surface (4) of the building (2), wherein the power units (3) and the supplementary heat units (5) are configured to be attached to the edge element (9),
wherein the first number of power units (3) and the second number of supplementary heat units (5) are arranged to cover the whole outer surface (4) of the building (2), when both being attached to the attachment elements (7) and to the edge element (9) being attached to the outer surface (4) of the building (2),
wherein the edge element (9) and the elongated attachment elements (7), when attached to the outer surface (4) of the building (2), are configured to create a number of channels (13) delimited by the outer surface (4) of the building (2) and by the power units (3) and by the supplementary heat units (5) attached to the attachment elements (7) and to the edge element (9), and
wherein the heat and power system (1) further comprises:
- an inlet (15) for a gaseous medium to be provided to a first channel (13.1) of the number of channels (13) to flow through said channels (13) while being heated by solar radiation passing through the power units (3) and the supplementary heat units (5) or while being cooled by air outside the building (2) and outside the system (1), and
- an outlet (17) for the gaseous medium to be transported out from a second channel (13.2) of the number of channels (13) of the heat and power system (1),
wherein the method comprises:
- choosing the first number of power units (3) depending on the area of the outer surface (4) of the building (2), and
- adapting the form, size and number of the supplementary heat units (5) to the remaining area of the outer surface (4) that cannot be well covered by the power units (3).
